# Europäisches Patentamt
## European Patent Office
### Office européen des brevets

(1) Publication number: **0 236 297**
**B1**

## EUROPEAN PATENT SPECIFICATION

(45) Date of publication of patent specification: **03.10.90**

(51) Int. Cl.⁵: **A 61 H 7/00**

(21) Application number: **85904044.6**

(22) Date of filing: **05.08.85**

(86) International application number:
**PCT/US85/01488**

(87) International publication number:
**WO 87/00749 12.02.87 Gazette 87/04**

(54) GUM MASSAGER.

(43) Date of publication of application:
**16.09.87 Bulletin 87/38**

(45) Publication of the grant of the patent:
**03.10.90 Bulletin 90/40**

(84) Designated Contracting States:
**AT BE CH DE FR GB IT LI LU NL SE**

(56) References cited:
US-A-1 996 205
US-A-2 042 239
US-A-2 141 969
US-A-2 527 857
US-A-2 600 136
US-A-2 888 008
US-A-3 050 072
US-A-3 129 499
US-A-3 368 553
US-A-4 296 518
US-A-4 535 761

(73) Proprietor: **ARNELL, INC.**
**7016 North 57th Avenue**
**Glendale, AZ 85301 (US)**

(72) Inventor: **RABINOWITZ, Lewis**
**4702 W. Northview Avenue**
**Glendale, AZ 85301 (US)**

(74) Representative: **Noz, Franciscus Xaverius, Ir. et al**
**Algemeen Octrooibureau P.O. Box 645**
**NL-5600 AP Eindhoven (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a dental massaging apparatus including a handle and a single massaing member mounted on an end of said handle, wherein said massaging member comprises a substantially rigid conical body having a longitudinal axis which extends transverse to said end of the handle, and wherein an axially extending shank depends from the base of said conical member, and extends through a bore extending transversely through said end of the handle, whilst an enlarged head has been formed at the end of the shank remote from the conical body.

Such an apparatus is known from US—A—3,050,072. In said known apparatus the shank is fixed in the bore and the enlarged head forms a protruding part at the side of the handle remote from the conical member.

US—A—4,296,518 shows a massaging apparatus having a conical resilient gum massaging element on the free end of a handle.

In said known apparatus the massaging element is only pivotable with respect to the handle in the same plane as the longitudinal axis of the handle between a stored position within a recess in the free end of the handle and an in-use position askew to the handle. A similar structure is known from US—A—2,888,008.

The dental massaging apparatus according to the invention is characterised in that the bore in the end of the handle includes a diverging portion opening into the surface of the handle facing the base of said massaging member, whilst the shank has a diameter slightly smaller than the smallest diameter of said diverging portion of said bore to allow a free changing of the angular relationship between said massaging member and said handle, and the bore has a countersunk area in the side of the handle remote from the conical body wherein has been disposed the enlarged head.

Due to the structure according to the invention there is obtained significant improvement of the gum massaging capabilities of the massaging apparatus according to the invention.

From US—A—3,368,353 is known a tooth-cleaning and massaging device having two picks which have been mounted such, that the distance between the end portions of the picks is less than the thickness of the average human tooth.

US—A—3,129,449 shows a tooth brush comprising a number of cleaning and massaging elements in the form of bristles or single staffs or bundles of staffs mounted in cylindrical holders. The bottom of each holder is in the form of a semispherical disc loosely received between two oblong cups, one of said cups having bores to accommodate said holders.

The foregoing and other objects of this invention as well as the invention itself may be more fully understood when read in conjunction with the following drawings.

Fig. 1 is a generally diagrammatic perspective view showing a gum massaging apparatus according to the present invention.

Fig. 2 is an enlarged fragmentary sectional view taken generally along the line 2—2 of fig. 1.

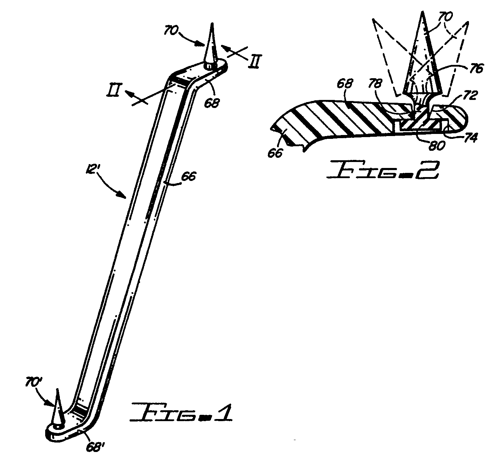

Referring now more particularly to Fig. 1 and 2 of the drawings, an apparatus of the present invention is illustrated wherein a handle part 12' includes a straight portion 66 and at least one and preferably the illustrated pair of offset portions 68 and 68' terminating longitudinally spaced ends of portion 66. Each of the portions 66 and 68' is provided with a respective massaging element 70 and 70' preferably arranged so as to extend codirectionally as illustrated in order to provide a pair of different angles facilitating massaging the gum areas in all parts of ones mouth. Each of the massaging elements 70, 70' is mounted on an associated one of the offset portions 68, 68' as by an outwardly flaired or diverging bore 72 having a countersunk area 74 in the lower or narrowest area thereof. Since Fig. 2 illustrates specific offset portion 68, only that portion will be referred to in the following discussion, which it being understood that offset 68' and its associated massaging element 70' can be attached to one another in an identical manner.

Massaging element 70 includes a generally tapered portion 76 constructed from a soft yet fairly rigid material, such as a natural or synthetic rubber, and similar to materials used for massaging tips commonly provided on handles of toothbrushes. Thus, conical portion 76 will be fairly rigid near the base thereof, but will tend to become flexible toward its apex. Extending downwardly from the base area of portion 76 is a shank 78 of greatly reduced diameter relative to the base of portion 76, which shank 78 terminating in a head 80 arrangeable in the countersunk area 74 so as to retain element 70 on offset portion 68. As can be appreciated, and as illustrated by broken lines in Fig. 2, the shank 78 will permit flexing of portion 76 relative to its holding portion 68. Accordingly, a desired universal undulating motion is achieved in a simple yet effective manner.

As can be readily understood from the above description and from the drawings, gum massaging apparatus according to the present invention permits one to massage gums, including the areas between teeth, in a simple yet efficient manner simply by inserting the tapered massaging element between adjacent teeth and permitting same to undulate relative to the gripping handle part. The undulation sets off vibrations which facilitate the massaging action. Apparatus according to the present invention can be constructed in a simple manner, with the specific materials being a matter of choice from among conventionally used materials such as rubbers, vinyls and the like.

While the principles of the invention have now been made clear in illustrated embodiments, there will be immediately obvious to those skilled in the art, many modifications of structure, arrangements, proportions, the elements, materials, and components used in the practice of the invention, and otherwise, which are particularly adapted for specific environments and operation requirements without departing from those principles.

The appended claims are therefore intended to cover and embrace any such modifications within the limits only of the true scope of the invention as defined in the appended claim.

**Claim**

A dental massaging apparatus including a handle (12') and a single massaging member (70) mounted on an end of said handle (12'), wherein said massaging member comprises a rigid conical body (76) made of soft yet fairly rigid material and having a longitudinal axis which extends transverse to said end of the handle, and wherein an axially extending shank (78) depends from the base of said conical member, and extends through a bore (72) extending transversely through said end of the handle, whilst an enlarged head (80) has been formed at the end of the shank (78) remote from the conical body (76), characterised in that the bore (72) in the end of the handle (12') includes a diverging portion opening into the surface of the handle (12'), facing the base of said massaging member, whilst the shank (78) has a diameter slightly smaller than the smallest diameter of said diverging portion of said bore (72) to allow a free changing of the angular relationship between said massaging member and said handle, and the bore (72) has a countersunk area (74) in the side of the handle remote from the conical body wherein has been disposed the enlarged head (80).

**Patentanspruch**

Dental-Massagevorrichtung, bestehend aus einem Handgriff (12') und einem an einem Ende des Handgriffes (12') befestigten, einteiligen Massageteil (70), wobei das Massageteil einen festen, konischen Körper (76) aus einem weichen, jedoch ziemlich steifen Material mit einer sich transversal zu dem Ende des Handgriffes erstreckenden Längsachse aufweist, und wobei ein sich axial erstreckender Schaft (78) ausgehend von der Basis des konischen Teils durch eine sich transversal durch das Ende des Handgriffes erstreckende Bohrung (72) verläuft, während ein erweiterter Kopf (80) an dem dem konischen Körper (76) abgekehrten Endes des Schaftes (78) gebildet ist, dadurch gekennzeichnet, daß die Bohrung (72) am Ende des Handgriffes (12') einen divergierenden, in Richtung der Oberfläche des Handgriffes (12') geöffneten Abschnitt aufweist, der der Basis des Massageteils gegenüberliegt, während der Schaft (78) einen Durchmesser aufweist, der geringfügig kleiner als der kleinste Durchmesser des divergierenden Abschnittes der Bohrung (72) ist, um ein ungehindertes Ändern der Winkelanordnung zwischen dem Massageteil und dem Handgriff zu ermöglichen, wobei die Bohrung (72) auf der dem konischen Körper abgekehrten Seite des Handgriffes einen Ansenkbereich (74) aufweist, in dem der erweiterte Kopf (80) angeordnet ist.

**Revendication**

Appareil de massage dentaire, comportant une poignée (12') et un élément de massage unique (70) monté sur une extrémité de ladite poignée (12'), dans lequel ledit élément de massage comporte un corps conique rigide (76) constitué en matériau souple et cependant modérément rigide, présentant un axe longitudinal qui s'étend transversalement à ladite extrémité de la poignée, et dans lequel une tige (78) s'étendant en direction axiale descend à partir de la base dudit élément conique et s'étend à travers un alésage (72) dirigé transversalement à travers ladite extrémité de la poignée, tandis qu'une tête agrandie (80) est formée l'extrémité de la tige (78) éloignée du corps conique (76), caractérisé en ce que l'alésage (72) de l'extrémité de la poignée (12') comprend une partie divergente débouchant dans la surface de la poignée (12') faisant face à la base dudit élément de massage, tandis que la tige (78) a un diamètre légèrement inférieur au petit diamètre de ladite partie divergente dudit alésage (72) pour permettre une variation libre de la position angulaire relative entre ledit élément de massage et ladite poignée, et ledit alésage (72) présente une zone renfoncée (74) dans le côté de la poignée éloigné du corps conique, la tête agrandie (80) étant disposée dans cette zone.

FIG-1

FIG-2